(19) Europäisches Patentamt
European Patent Office
Office européen des brevets

(11) Numéro de publication: **0 030 904 B1**

# (12) FASCICULE DE BREVET EUROPEEN

(45) Date de publication du fascicule du brevet: **27.03.85**

(51) Int. Cl.⁴: **C 08 G 69/44**, C 08 G 63/68

(21) Numéro de dépôt: **80420137.4**

(22) Date de dépôt: **09.12.80**

(54) **Copolyesteramides souples à basse température.**

(30) Priorité: **10.12.79 FR 7930650**

(43) Date de publication de la demande: **24.06.81 Bulletin 81/25**

(45) Mention de la délivrance du brevet: **27.03.85 Bulletin 85/13**

(84) Etats contractants désignés: **AT BE CH DE FR GB IT LI LU NL SE**

(56) Documents cités:
**DE - A - 1 445 308**
**FR - A - 1 252 419**
**FR - A - 1 416 456**
**FR - A - 1 547 058**
**FR - A - 2 010 384**
**FR - A - 2 096 287**
**FR - A - 2 320 189**

**Le dossier contient des informations techniques présentées postérieurement au dépôt de la demande et ne figurant pas dans le présent fascicule.**

(73) Titulaire: **RHONE-POULENC SPECIALITES CHIMIQUES, "Les Miroirs" 18, Avenue d'Alsace, F-92400 Courbevoie (FR)**

(72) Inventeur: **Coquard, Jean, Route du Crest, F-69290 Grezieu La Varenne (FR)**
Inventeur: **Goletto, Jean, Le Joli Mai 2, rue Tramier, F-69190 Ecully (FR)**

(74) Mandataire: **Trolliet, Maurice et al, RHONE-POULENC RECHERCHES Service Brevets Chimie et Polymères Centre de Recherches de Saint-Fons B.P. 62, F-69192 St-Fons Cédex (FR)**

EP 0 030 904 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne de nouveaux copolyesteramides à structure bloc, statistiques ou alternés, de haut poids moléculaire et présentant une flexibilité et une élasticité importante jusqu'à des températures inférieures ou égales à —30° C.

Il a déjà été décrit dans la littérature des copolyesteramides ayant des températures de transition vitreuse inférieures à 0° C. Par exemple dans le brevet US-A-3 650 999, on trouve des copolyesteramides bloc dont la phase cristalline est consitituée de mofifs polyester et dont la phase amorphe est constituée de motifs polyamide. De tels copolymères perdent toutefois toute flexibilité et souplesse entre —10° C et —20° C. De plus leur masse moléculaire peu élevée ne permet de les utiliser que comme adhésifs.

De même dans la brevet FR-A-2 359 167 (demande n° 77/22305), il est décrit des élastomères thermoplastiques constitués par des copolyesteramides blocs. Ces produits présentent des propriétés intéressantes, notamment la flexibilité à basse température. Cependant leurs modules ne sont pas généralement suffisamment bas et leur hétérogénéité à l'état fondu rend leur préparation délicate.

Or on a besoin pour certaines applications d'élastomères thermoplastiques ayant à la fois une bonne cohésion et restant souples jusqu'à des températures inférieures à 30° C.

Il a maintenant été trouvé des polyesteramides à structure bloc, statistique ou alternée ayant une température de transition vitreuse inférieure à —30° C, caractérisés en ce qu'ils sont obtenus à partir d'une part d'un composé acide comprenant un acide gras dimère saturé obtenu par fractionnement d'une composition hydrogénée issue de la polymérisation catalytique d'un mélange d'acides oléique, linoléique et linolénique du type Empol 1010 et d'autre part d'un composé dihydroxylé et d'un composé diaminé ou d'un lactame.

On préférera des acides dimères dont la teneur en acide monofonctionnel est inférieure à 1% en poids et de préférence à 0,2% en poids et dont la teneur en acide de fonctionnalité supérieure à 2 est inférieure à 5% en poids et de préférence inférieure à 3% en poids.

Les copolymères selon l'invention peuvent présenter à la fois une bonne cohésion et une bonne souplesse. Pour ce faire, un compromis doit être trouvé dans les proportions relatives des segments polyester et des segments polyamides. La proportion pondérale en segments polyesters sera avantageusement comprise entre 20% et 87,5% et, si l'on désire obtenir des élastomères à faibles modules de préférence entre 50% et 87,5%.

Pour le calcul de ces proportions pondérales en segments esters et amides on admet que les segments esters dérivent d'un acide carboxylique par perte d'un OH et d'un alcool par perte d'un H, que les segments amides dérivent d'un acide carboxylique par perte d'un OH et d'une amine par perte d'un H, que les structures participant à la fois à des segments esters et amides, à l'exception des groupements —CO—, —NH—, —O—, (restes fonctionnels), sont partagés par moitié entre ces segments esters et amides.

Dans les polyesteramides selon l'invention, la cohésion est essentiellement apportée par les segments amides. De ce fait, dans les proportions pondérales indiquées ci-dessus qui sont comprises entre 20 et 87,5%, on pourra aussi faire varier dans certaines limites la composition des segments amides pour obtenir les propriétés mécaniques choisies.

Différents procédés peuvent être utilisés pour la préparation des polyesteramides selon l'invention.

La présence d'acide dimère augmente de façon générale la compatibilité des différents constituants et permet l'obtention de polymères de haut poids moléculaire avec des durées de réactions sous vide généralement inférieures à 2 ou 3 heures. Les réactions secondaires conduisant à des produits fortement colorés et de bas poids moléculaire qui sont fréquentes lors de la préparation de polyesteramides obtenus à partir de diacides ayant des condensations en carbone inférieure à 6 et de diol à chaînes courtes (inférieures ou égales à 4 carbones) sont de faible importance, sinon inexistantes dans le cas des polyesteramides selon l'invention. Les structures obtenues présentent de plus une bonne stabilité à l'hydrolyse.

On peut effectuer la réaction de polycondensation —estérification à partir du mélange de tous les réactifs: on obtient alors une structure essentiellement statistique (cf. exemple 1).

Il est possible de former d'abord des blocs amides puis d'effectuer la réaction d'estérification: on obtient alors une structure bloc essentiellement statistique si les blocs amides sont à groupements acides terminaux ou une structure bloc essentiellement alternée si les blocs amides sont d'abord estérifiés (cf. exemples 2, 3, 6, 7 et 8). Un tel procédé est décrit dans le brevet US-A-3 849 514.

Il est aussi possible de partir du diester amide préformé consistant dans le bis(NN' para carbométhoxy benzoyl) hexaméthylène diamide décrit dans le brevet BE-A-857 005 et dont la formule générale est:

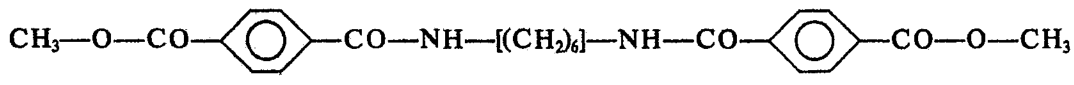

Il est possible de coupler des blocs polyamides et des blocs polyesters de poids moléculaire compris

entre 500 et 5000 (cf. exemples 4, 5, 9 et 10).

L'acide gras dimère mis en œuvre dans la présente invention pourra être engagé totalement dans les séquences esters ou totalement dans les séquences amides ou reparti entre les deux types de séquences.

Selon la composition et le procédé mis en œuvre on obtiendra des polyesteramides ayant des propriétés élastomériques variables et qui pourront être ajustées à volonté. Mais le principal intérêt de ces élastomères thermoplastiques est le maintien de ces propriétés élastomériques jusqu'à des températures de l'ordre de −30° C.

Les polyesteramides selon l'invention pourront être utilisés dans diverses applications où leurs bonnes propriétés mécaniques et de résistance au choc à basse température seront appréciées. Utilisés seuls, ces polyesteramides permettront d'obtenir des fils textiles, des films, des pièces conformées, des enduits et des ahésifs.

Avec des polyesteramides semi cristallins on pourra obtenir des adhésifs du type Hot Melt ou des enduits. Ces polyesteramides pourront aussi être utilisés pour le renforcement de nombreux autres polymères comme les polyamides ou les polyoléfines, conférant aux compositions ainsi obtenues un ensemble de propriétés particulièrement intéressantes.

Les exemples qui vont suivre illustrent les diverses compositions revendiquées selon l'invention.

Dans ces exemples, un certain nombre de contrôles sont effectués. De même diverses propriétés sont mesurées. On indique ci-dessous les modes opératoires ou normes selon lesquels ces contrôles sont effectués.

## 1. Détermination de la viscosité inhérente

La polymère séché est mis en solution à 0,5% dans la métacrésol. On mesure le temps d'écoulement de cette solution par rapport à celui du solvant pur. La valeur de la viscosité inhérente est donnée par la formule:

$\eta_{inh.}$ = 4,6 (log. $t_1$ − log. $t_0$)
$t_1$ = temps d'écoulement de la solution
$t_0$ = temps d'écoulement du solvant

Elle est exprimée en dl/g

## 2. Analyse microcalorimétrique

On caractérise les polymères ou les mélanges de polymères par leur viscosité intrinsèque mais aussi par les caractéristiques de fusion telles que les endothermes de fusion Ef.

Ces déterminations sont effectuées sur un échantillon soumis à des variations de température tant en montée qu'en descente de 10° C/mn. On détermine ainsi une courbe par microcalorimétrie différentielle sur laquelle on peut repérer les endothermes de fusion.

## 3. Transition vitreuse

La température de transition vitreuse correspond à la chute brutale du module de cicaillement en fonction de la température. Elle peut être déterminée sur la graphique représentant les variations du module de torsion en fonction de la température, variations mesurées par analyse thermomécanique au pendule de torsion automatique.

## 4. Température de ramollissement

Elle est déterminée au banc Kofler.

## 5. Module de cisaillement en torsion

Il est déterminé à trois températures à −20° C, 0° C et +20° C au phendule automatique de torsion sous une fréquence de l'ordre de 1 Hertz selon la norma ISO R 537.

6. Détermination des groupements tarminaux

$NH_2$: Dosage potentiométrique automatique de la solution de polymère dans le mélange phénol—eau 90/10 an poids par HCl. Le résultat est donné en milliéquivalents gramme pour $10^3$ g de polymère.

COOH: Dissolution à chaud sous atmosphère d'azote du polymère dans l'alcool benzylique et dosage acidimétrique sous azote de cette solution chaude par une solution glycolique de potasse en présence de phénolphthaléine. Le résultat est donné en milli équivalents gramme pour $10^3$ g de polymère.

Exemple 1

Préparation de polyesteramides à partir d'acide dimère, d'hexane diol, 1—6 et d'hexaméthylène diamine

On opèra dans un réacteur de verre, agité et équipé pour travailler sous vide.

On introduit à température ambiante:

- 40,3 g (0,07 mole) de dimère d'acide gras ayant un taux de monomère de 0,03% et un taux de trimère voisin de 3% (commercialisé par Unilever Emery sous la marque déposée Empol 1010); on utilisera dans les exemples suivants ca dimère d'acide que l'on appellera »acide dimère«.
- 4,06 g (0,035 mole) d'hexaméthylène diamine
- 5,9 g (0,05 mole) d'hexanediol-1,6
- 10 mg de glycolate de titane (catalyseur)

L'appareil étant purgé soigneusement sous azote, on agite et on porte la température de la masse à 260°C en 1 h 30. On établit ensuite le vide jusqu'à atteindre 0,66 · $10^2$ Pa et on polycondense à 260°C pendant 1 h 30. Le polymère obtenu est homogène et présente des propriétés caoutchoutiques. Ses caractéristiques sont données dans le tableau ci-après.

Exemple 2

Préparation de polyesteramide à partir d'acide dimère, d'éthylèneglvcol et d'hexaméthylène diamine

On opère dans un autoclave inox de 7,5 l muni d'une agitation de type ancre équipé d'une dynamo tachymétrique.

On introduit à température ambiante dans l'autoclave les réactifs suivants:

| | |
|---|---|
| acide dimère: | 892,04 g (1,289 mole) |
| Hexaméthylène diamine pure cristallisée: | 141,23 g (1,217 mole) |

La charge de ces réactifs est calculée de façon à préparer un prépolyamide de poids molaire 3000 à groupements COOH terminaux.

Les réactifs étant introduits à température ambiante on purge soigneusement sous azote puis on porte sous agitation la température de la masse à 270°C en 2 heures. On maintient ensuite 45 mm à 270° puis on ramène à température ambiante.

On introduit alors dans l'autoclave les réactifs suivants:

| | |
|---|---|
| acide dimère: | 1915,6 g (3,323 moles) |
| éthylène glycol: | 339,7 g (5,478 moles) |
| glycolate de titana: | 0,5 g |

On purge de nouveau soigneusement sous azote puis on porte sous agitation la température de la masse à 200°C en 1 h 15 pour amener la distillation de l'eau. La température est ensuite portée à 270° en 1 h 15. On établit ensuite en 1 h 30 le vide jusqu'à atteindre 0,53—0,66 · $10^2$ Pa. On polycondense ensuite pendant 1 h 15 à 270°C sous 0,53—0,66 · $10^2$ Pa.

Le polymère est ensuite soutiré sous pression d'azote et recueilli dans l'eau puis granulé après refroidissement dans l'azote liquide.

Les caractéristiques du produit obtenu sont portées dans le tableau ci-après.

Exemple 3

Préparation de polyesteramide à partir d'acide dimère, d'acide sébacique, d'éthylène glycol et d'hexaméthylène diamine (HMD)

On prépare dans un premier temps un polyamide acide dimèreacide sébacique (70/30 P/P) et hexaméthylène diamine dans les conditions nécessaires pour obtenir un poids moléculaire de 2000 et un polyamide à COOH terminaux.

Dans un réacteur Pyrex (marque déposée) de 1 l on introduit à température ambiante les réactifs suivants:

| | |
|---|---|
| acide dimère: | 319,4 g (0,554 mole) |
| acide sébacique: | 260,2 g (1,288 mole) |
| HMD pure cristallisée: | 170 g (1,467 mole) |

On purge soigneusement sous azote et porte sous agitation la température de la masse à 265° en 2 heures. La masse obenue est parfaitement homogène. On maintient 1 h 15 à 265°C. Le polymère obtenue est soutiré dans l'eau puis broyé et séché à 100° en étuve sous vide. Les caractéristiques du prépolyamide obtenu sont les suivantes:

| | |
|---|---|
| — groupements terminaux — COOH: | 982,5 mEq/kg |
| — groupements terminaux — $NH_2$: | 2,8 mEq/kg |
| — Pf par ATD: | 185° C |
| — Poids molaire d'après groupements terminaux: | 2070 |

Dans un autoclave inox de 7,5 l on introduit à température ambiante les réactifs suivants:

| | |
|---|---|
| Prépolyamide préparé précédemment: | 522,6 g |
| Ethylène glycol: | 307,7 g (4,962 moles) |
| Acide dimère: | 1744,5 g (3,026 moles) |
| Glycolate de titane: | 0,414 g |

On purge soigneusement sous azote, agite et porte la température de la masse à 270° C en 2 h 15. On établit en 1 h 15 le vide jusqu'à atteindre $0,4 \cdot 10^2$ Pa. L'agitation est maintenue 2 h 30 à 270°C sous $0,4 \cdot 10^2$ Pa. Le polymère est ensuite soutiré sous pression d'azote, recueilli dans l'eau puis granulé après rafroidissement à l'azote liquide.

Les caractéristique du produit obtenu sont portées sur le tableau ci-après.

Exemple 4

Préparation de polyétheresteramide à partir d'acide dimère, de polytétrahydrofuranne (poly THF), d'acide sébacique et d'éthylène glycol

1. Condensation acide dimère — Poly THF de PM 2000

Dans un autoclave inox de 7,5 l, on introduit les réactifs suivants:

| | |
|---|---|
| Acide dimère: | 1180,7 g (2,048 moles) |
| Poly THF: | 2048 g (1,024 mole) |
| (vendu sous la marque déposée TERACOL 2000) | |

On purge soigneusement sous azote, agite et amène la température de la masse à 250° C en 2 heures. On établit ensuite le vide en 1 heure jusqu'à atteindre $0,4 \cdot 10^2$ Pa. La masse est maintenue 2 h à 250° C sous $0,4 \cdot 10^2$ Pa. La masse est ensuite ramenée à température ambiante. Le dosage des COOH réalisé sur la résidu indique 0,0642 COOH/100 g.

Dans le même autoclave, on maintient 2800 g du produit préparé ci-dessus, on ajoute les réactifs suivants:

| | |
|---|---|
| Polyamide acide dimère — acide sébacique hexaméthylène diamine PM 2000 à COOH terminaux identique à celui décrit dans l'exemple précédent: | 650 g (0,06857 COOH) |
| Ethylène glycol: | 154 g (2,4833 moles) |
| glycolate de titane: | 0,945 g |

L'appareil est purgé soigneusement sous azote, la température de la masse est portée à 250° C en 1 h, et maintenue ensuite 1 h. On établit ensuite en 1 h 15 le vide jusqu'à atteindre 0,4 · $10^2$ Pa. On polycondense 1 h 45 à 250° C sous 0,4 · $10^2$ Pa. Le polymère est soutiré sous pression d'azote refroidi à l'eau puis granulé après passage dans un mélange acétone carboglace. Les caractéristiques du produit obtenu sont indiquées dans le tableau ci-après.

Exemple 5

Préparation de polyétheresteramide de Poly THF, d'acide sébacique et d'éthylène glycol

a) Condensation acide dimèra — Poly THF (de PM 1000)

Dans un autoclave de 7,5 l on introduit les réactifs suivants:

| | |
|---|---|
| acide dimère: | 1634 g (2,834 mole) |
| Poly THF: | 1417 g (1,417 mole) |
| (vendu sous la marque déposée TERACOL 1000) | |

La mode opératoire est identique à celui décrit précédemment. Le dosage dans COOH réalisé sur le résidu indique un taux de 0,0877 COOH pour 100 g.

Dans le même autoclave on maintiant 2796 g du produit ci-dessus et on ajoute les réactifs suivants:

| | |
|---|---|
| Polyamide acide dimère — acide sébacique hexaméthylène diamine PM 2000 à COOH terminaux: | 649 g |
| Ethylène glycol: | 194 g |
| Glycolate de titane: | 0,945 g |

Le mode opératoire est identique à celui décrit précédemment on polycondense 2 h 40 à 250° C sous 0,13—0,19 · $10^2$ Pa. Le produit est recueilli dans les mêmes conditions, les caractéristiques sont indiquées dans le tableau ci-après.

Exemples 6 et 7

Polyesteramide à partir de bis NN' carbométhoxy benzoyl hexaméthylène diamine
— hexanediol-1—6, acide dimère —

Ce type de polyesteramide est constitué par des motifs rigides obtenus par réaction de:

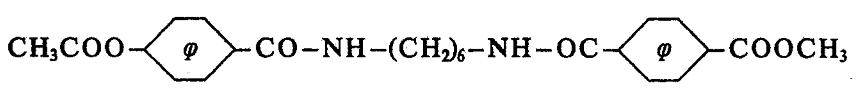 + hexanediol 1-6

**bis NN' carbométhoxybenzoyl HMD**

et par des motifs souples obtenus par réaction d'acide dimère et d'hexanediol-1,6.

Notons qu'il est possible en fonction de la composition d'obtenir toute une gamme de produits dont la rigidité diminue quand la teneur en motifs souples augmente.

Exemple 6

(Motifs souples 75% — Motifs rigides 25%)

Dans un réacteur pyrex de 100 ml agité et équipé pour travailler sous vide on charge à température ambiante:

| | |
|---|---|
| Bis NN' carbométhoxybenzoyl HMD: | 8,91 g |
| Hexanediol-1,6: | 11,64 g |
| Glycolate de titane: | 10 mg |

Après purges à l'azote, on porte sous agitation la température à 240° en 1 h 15, on maintient sous

agitation à 240° C pendant 1 heure. La masse obtenue est parfaitement limpide.

On ramène à température ambiante et ajoute 26,2 g (0,0455 mole) d'acide dimère. On purge de nouveau l'appareil à l'azote et porte à 270° sous agitation en 1 h 30 et maintient 1 h à 270°. On établit en 30 min le vide jusqu'à atteindre 0,4 · $10^2$ Pa et polycondense pendense pendant 2 heures à 270° C sous 0,33—0,4 · $10^2$ Pa. La masse obtenue en fin de réaction est homogène. A froid la produit est souple, et conserve de bonnes propriétés jusqu'à 150—160° C.

### Exemple 7

(Motifs souples 50% — Motifs rigides 50%)

Dans un réacteur identique au précédent on charge:

| | |
|---|---|
| Bis NN' carbométhoxybenzoyl HMD: | 17,81 g (0,0404 mole) |
| Hexanediol 1—6: | 12,54 g (0,1062 mole) |
| glycolate de titane: | 10 mg |

Le mode opératoire est identique à celui décrit précédemment.

On ajoute pour la 2ème phase: acide dimère (0,03067 mole) on polycondense 1 h 30 à 270° C sous 0,26—0,4 · $10^2$ Pa. Le polymère obtenu est homogène présente un point de fusion à 210° C et garde de bonnes propriétés mécaniques jusqu'à 180° C.

Les propriétés des produits obtenus sont portées dans le tableau ci-après.

### Exemple 8

Préparation de polyesteramide à base de caprolactame, acide dimère, poly THF et hexanediol-1,6

1. Préparation d'un prépolyamide à base de caprolactame et d'acide dimère

On prépare un prépolyamide présentant la structure suivante:

$$OH{-}\!\!\left[CO{-}(CH_2)_5{-}NH\right]_x\!{-}CO \cdots\cdots\cdots\cdots COOH$$

acide dimère

x est voisin de 8 pour un PM voisin de 1500.

Dans un petit réacteur en verre équipé pour travailler sous vide et muni d'une agitation ancre inox on introduit à température ambiante:

35,5 g de caprolactame, 3,5 g d'acide amino caproïque et 14,40 g d'acide dimère. On réalise des purges à l'azote et in maintient un léger courant d'azote. La température de la masse est portée à 270° C (on maintient 1 h 30 sous agitation à cette température). On établit ensuite en 30 minutes le vide jusqu'à environ 13,3 · $10^2$ Pa que l'on maintient durant 10 minutes. On refroidit ensuite sous courant d'azote.

Le prépolymère obtenu présente une teneur en groupements COOH de 1330 mEq/kg et une teneur en groupements $NH_2$ non détectable par la méthode indiquée.

2. Préparation d'un polyesteramide

Dans l'appareillage décrit précédemment in introduit 20 g du prépolyamide précédent, 10 g de poly THF (TERACOL 1000) 1 g d'hexanediol 1—6 et 10 mg de glycolate de titane. On réalise des purges à l'azote. La température de la masse est ensuite portée à 260° C en 40 min, on établit le vide jusqu'à atteindre 0,4 · $10^2$ Pa 45 min et réalise la polycondensation à 260° C 0,4 · $10^2$ Pa pendant 1 h. Le polyesteramide atteint une viscosité fondue importante en fin de réaction, il est transparent et peu coloré. A froid le polymère est souple et présente des propriétés élastomériques.

Les propriétés du produit obtenue sont portées sur le tableau ci-après.

### Exemple 9

Préparation de polyesteramide à partir de prépolyamide à groupements terminaux hydroxyles et de prépolyester à groupements terminaux hydroxyles

Dans cat exemple on prépare un polyesteramide composé de 50% en poids de motifs esters et de 50% en poids de motifs amides à partir d'un prépolyamide de poids moléculaire 2500 constitué par 50% en poids de prépolyamide acide dimèra — hexaméthylène diamine (HMD) et de 50% en poids de prépolyamide acide sébacique — HMD et dont les groupements terminaux acides carboxyliques ont

été estérifiés par l'hexanediol 1—6. Le prépolyester a un poids moléculaire de 2500 et est préparé à partir d'acide dimère et d'hexanediol-1,6.

On prépare dans un premier temps le prépolyamide et le prépolyester de PM 2000.

Dans un réacteur identique à celui décrit dans l'exemple 6, on introduit:

| | |
|---|---|
| Prépolyamide de PM 2500 à OH terminaux: | 20 g |
| Prépolyester de PM 2000 à OH terminaux: | 20 g |
| Hexanediol 1—6 | 1,6 g |
| glycolate de titane | 10 mg |

Après purges à l'azote, on porte sous agitation la température de la masse à 260°C en 1 heure, on maintient 1 h à 260° puis on établit le vide jusqu'à 0,59—0,66 · $10^2$ Pa puis on polycondense dans ces conditions pendant 3 h. La masse obtenue en fin de réaction est très visqueuse. Le produit est souple homogène et conserve de bonnes propriétés jusqu'à 150—160°C. Les caractéristiques sont indiquées dans le tableau ci-après.

## Exemple 10

Préparation de polyesteramide (réactifs identiques à ceux utilisès pour l'exemple 9 mais les pourcentages de motifs sont différents: composition motifs esters/motifs amides = 75/25 en poids)

Dans un réacteur identique à celui décrit dans l'exemple 6 on introduit:

| | |
|---|---|
| Prépolyamide de PM 2500 à OH terminaux: | 10 g |
| Prépolyester de PM 2500 à OH terminaux: | 30 g |
| Hexanediol-1,6: | 1,6 g |
| Glycolate de titane: | 10 mg |

La mode opératoire est identique à celui décrit dans l'examplе 9. On polycondense pendant 5 h à 260° sous 0,4—0,53 · $10^2$ Pa. Le produit obtenu en fin de réaction est très visqueux, souple et homogène et conserve de bonne propriétés mécaniques jusqu'à 120°—130°C. Les caractéristiques sont indiquées dans le tableau ci-après.

| Exemple | Viscosité inhérente à 0,5% dans m-crésol à 25°C en dl/g | Caractéristiques thermiques des endothermes de fusion*) | Température de ramollissement (banc Kofler) °C | Caractéristiques thermomécaniques en torsion au pendule automatique Tg°C | Module en torsion MPa −20°C | 0°C | 20°C |
|---|---|---|---|---|---|---|---|
| 1 | 0,6 | non observé | 45— 50 | —50 | 60 | 32 | 29 |
| 2 | 0,71 | non observé | 45— 50 | —50 | 10 | 9 | 9 |
| 3 | 0,84 | 55°C | 50 | —49 | 8,5 | 8,3 | 8 |
| 4 | 1,18 | 17°C | 50— 60 | —75 | 40 | 23 | 5,5 |
| 5 | 1,12 | — | 50— 60 | —74 | 40 | 10 | 8 |
| 6 | | non observé | 150—160 | —55 | 20 | 15 | 14 |
| 7 | | 17°C—210°C | 180 | —44 | 250 | 102 | 65 |
| 8 | | 197°C | 180 | —65 | — | — | — |
| 9 | 0,93 | 217°C | 150—160 | —59 | 70 | 50 | 40 |
| 10 | 0,60 | | 120—130 | —59 | 9 | 7 | 6,5 |

*) Les caractéristiques thermiques sont déterminées par microcalorimétrie différentielle sous azote avec montée en température de 10°C par mn.

**Revendications pour les Etats contractants BE CH DE FR GB IT LI LU NL SE**

1. Polyesteramides élastomères thermoplastiques à stucture bloc, statistique ou alternée, ayant un poids moléculaire élevé dont la valeur minimale correspond à une viscosité inhérente mesurée à 0,5% en poids dans le m-crésol à 25°C égale à 0,6 dl/g, ayant une température de transition vitreuse inférieure à −30°C et présentant une structure formée de segments polyamides cristallins, caractérisés en ce qu'ils sont obtenus par réaction directe du mélange comprenant:

(a) un acide gras dimère saturé obtenu par fractionnement d'une composition hydrogénée issue de la polymérisation catalytique d'un mélange d'acides oléique, linoléique et linolénique du type Empol 1010, la teneur en acides monofonctionnels de cet acide dimère étant inférieure à 1% en poids et de préférence à 0,2% en poids et sa teneur en acides de fonctionnalité supérieure à 2 étant inférieure à 5% en poids et de préférence à 3% en poids;
(b) de l'hexanediol-1,6,
(c) et de l'hexaméthylènediamine.

2. Polyesteramides élastomères thermoplastiques à structure bloc, statistique ou alternée, ayant un poids moléculaire élevé dont la valeur minimale correspond à une viscosité inhérente mesurée à 0,5% en poids dans le m-crésol à 25°C égale à 0,6 dl/g, ayant une température de transition vitreuse inférieure à −30°C et présentant une structure formée de segments polyamides cristallins, caractérisés en ce qu'ils sont obtenus en réalisant les étapes suivantes:

- on forme d'abord des blocs amides à partir:
  - d'un composé acide (a) choisi parmi (i) un acide dimère tel que défini dans la revendication 1, ou (ii) un mélange d'un pareil acide dimère avec de l'acide sébacique ou du caprolactame, ou (iii) du téréphthalate de diméthyle,
  - et d'hexaméthylènediamine (c), le réactif (c) étant omis dans le cas de l'emploi d'un composé acide (a, ii) consistant dans le mélange acide dimère/caprolactame;
  - puis on effectue la réaction d'estérification par ajout dans le prépolyamide ainsi formé:

  - dans le cas où les blocs amides sont obtenus à partir d'un composé acide consistant en un acide dimère (i) ou en un mélange (ii) acide dimère/acide sébacique: d'un mélange d'acide dimère et d'éthylèneglycol,
  - dans le cas où les blocs amides sont obtenus à partir d'un composé acide consistant en un mélange (ii) acide dimère/caprolactame: de polytétrahydrofurane de poids moléculaire compris entre 500 et 5000,
  - dans le cas où les blocs amides sont obtenus à partir d'un composé acide consistant en du téréphthalate de diméthyle (iii): d'un mélange d'acide dimère et d'hexanediol-1,6.

3. Polyesteramides élastomères thermoplastiques à structure bloc, statistique ou alternée, ayant un poids moléculaire élevé dont la valeur minimale correspond à une viscosité inhérente mesurée à 0,5% en poids dans le m-crésol à 25°C égale à 0,6 dl/g, ayant une température de transition vitreuse inférieure à −30°C et présentant une structure formée de segments polyamides cristallins, caractérisés en ce qu'ils sont obtenus en réalisant les étapes suivantes:

- on forme d'abord des blocs amides à partir:
  - d'un composé acide (a) constitué par un mélange (ii) d'un acide dimère tel que défini dans la revendication 1 avec de l'acide sébacique,
  - et d'hexaméthylènediamine (c);
- et des blocs esters à partir d'un acide dimère et d'un composé dihydroxylé (b) consistant en de l'hexanediol-1,6 ou en du polytétrahydrofuranne de poids moléculaire compris entre 500 et 5000,
- puis on couple les blocs préformés.

4. Polyesteramides selon la revendication 1, 2 ou 3, caractérisès en ce que les proportions des divers réactifs sont déterminées de manière à conduire à une structure polymérique comprenant 12,5 à 80% en poids de segments polyamides et 87,5 à 20% en poids de segments polyesters.

**Revendications pour l'Etat contractant AT**

1. Procédé d'obtention de polyesteramides élastomères thermoplastiques à structure bloc, statistique ou alternée, ayant un poids moléculaire élevé dont la valeur minimale correspond à une viscosité inhérente mesurée à 0,5% en poids dans le m-crésol à 25°C égale à 0,6 dl/g, ayant une température de transition vitreuse inférieure à −30°C et présentant une structure formée de segments polyamides cristallins, caractérisés en ce qu'on effectue la réaction directe du mélange comprenant:

(a) un acide gras dimère saturé obtenu par fractionnement d'une composition hydrogénée issue de la polymérisation catalytique d'un mélange d'acides oléique, linoléique et linolénique du type Empol® 1010, la teneur en acides monofonctionnels de cet acide dimère étant inférieure à 1% en poids et de préférence à 0,2% en poids et sa teneur en acides de fonctionnalité supérieure à 2 étant inférieure à 5% en poids et de préférence à 3% en poids;
(b) de l'hexanediol-1,6,
(c) et de l'hexaméthylènediamine.

2. Procédé d'obtention de polyesteramides élastomères thermoplastiques à structure bloc, statistique ou alternée, ayant un poids moléculaire élevé dont la valeur minimale correspond à une viscosité inhérente mesurée à 0,5% en poids dans le m-crésol à 25° C égale à 0,6 dl/g, ayant une température de transition vitreuse inférieure à —30° C et présentant une structure formée de segments polyamides cristallins, caractérisés en ce qu'on réalise les étapes suivantes:

— on forme d'abord des blocs amides à partir:
  — d'un composé acide (a) choisi parmi (i) un acide dimère tel que défini dans la revendication 1, ou (ii) un mélange d'un pareil acide dimère avec de l'acide sébacique ou du caprolactame, ou (iii) du téréphthalate de diméthyle,
  — et d'hexaméthylènediamine (c), le réactif (c) étant omis dans le cas de l'emploi d'un composé acide (a, ii) consistant dans le mélange acide dimère/caprolactame;
— puis on effectue la réaction d'estérification par ajout dans le prépolyamide ainsi formé:
  — dans le cas où les blocs amides sont obtenus à partir d'un composé acide consistant en un acide dimère (i) ou en un mélange (ii) acide dimère/acide sébacique: d'un mélange d'acide dimère et d'éthylèneglycol,
  — dans le cas où les blocs amides sont obtenus à partir d'un composé acide consistant en un mélange (ii) acide dimère/caprolactame: de polytétrahydrofurane de poids moléculaire compris entre 500 et 5000,
  — dans le cas où les blocs amides sont obtenus à partir d'un composé acide consistant en du téréphthalate de diméthyle (iii): d'un mélange d'acide dimère et d'hexanediol-1,6.

3. Procédé d'obtention de polyesteramides élastomères thermoplastiques à structure bloc, statistique ou alternée, ayant un poids moléculaire élevé dont la valeur minimale correspond à une viscosité inhérente mesurée à 0,5% en poids dans le m-crésol à 25° C égale à 0,6 dl/g, ayant une température de transition vitreuse inférieure à —30° C et présentant une structure formée de segments polyamides cristallins, caractérisés en ce qu'on réalise les étapes suivantes:

— on forme d'abord des blocs amides à partir:
  — d'un composé acide (a) constitué par un mélange (ii) d'un acide dimère tel que défini dans la revendication 1 avec de l'acide sébacique,
  — et d'hexaméthylènediamine (c);
— et des blocs esters à partir d'un acide dimère et d'un composé dihydroxylé (b) consistant en de l'hexanediol-1,6 ou en du polytétrahydrofuranne de poids moléculaire compris entre 500 et 5000,
— puis on couple les blocs préformés.

4. Procédé selon la revendication 1, 2 ou 3, caractérisés en ce que les proportions des divers réactifs sont déterminées de manière à conduire à une structure polymérique comprenant 12,5 à 80% en poids de segments polyamides et 87,5 à 20% en poids de segments polyesters.

**Patentansprüche für die Vertragsstaaten: BE, CH, DE, FR, GB, IT, LI, LU, NL, SE**

1. Thermoplastische, elastomere Polyesteramide mit statistischer oder alternierender Blockstruktur, mit einem hohen Molekulargewicht, dessen Minimalwert einer Inhärentviskosität, gemessen bei 0,5 Gew.-% in m-Kresol bei 25° C, gleich 0,6 dl/g entspricht, mit einer Glasübergangstemperatur unterhalb —30° C und mit einer Struktur, die aus kristallinen Polyamidsegmenten gebildet ist, dadurch gekennzeichnet, daß durch direkte Umsetzung der Mischung, bestehend aus

(a) einer gesättigten dimeren Fettsäure, erhalten durch Fraktionierung einer hydrierten Verbindung, die aus der katalytischen Polymerisation einer Mischung von Olein-, Linol- und Linolensäure vom Typ Empol 1010 stammt, wobei der Gehalt dieser dimeren Säure an monofunktionellen Säuren kleiner als 1 Gew.-% ist und vorzugsweise 0,2 Gew.-% beträgt und ihr Gehalt an Säuren mit einer Funktionalität von mehr als 2 unterhalb 5 Gew.-%, vorzugsweise bei 3 Gew.-%, liegt; Säuren kleiner als 1 Gew.-% ist und vorzugsweise 0,2 Gew.-% beträgt und ihr Gehalt an Säuren mit einer Funktionalität von mehr als 2 unterhalb 5 Gew.-%, vorzugsweise bei 3 Gew.-%, liegt;

(b) 1,6-Hexandiol und
(c) Hexamethylendiamin

erhalten wurde.

2. Thermoplastische elastomere Polyesteramide mit statistischer oder alternierender Blockstruktur, mit einem hohen Molekulargewicht dessen Minimalwert einer Inhärentviskosität, gemessen bei 0,5 Gew.-% in m-Kresol bei 25° C, gleich 0,6 dl/g entspricht, mit einer Glasübergangstemperatur unterhalb —30° C und mit einer Struktur, die aus kristallinen Polyamidsegmenten gebildet ist, dadurch gekennzeichnet, daß sie erhalten wurden, indem man die folgenden Stufen ausführt:

- man bildet zuerst Amidblöcke aus:
  - einer sauren Verbindung (a), ausgewählt aus (i) einer dimeren Säure wie im Anspruch 1 definiert, oder (ii) einer Mischung einer gleichartigen dimeren Säure mit Sebacinsäure oder Caprolactam, oder (iii) Dimethylterephthalat
  - und Hexamethylendiamin (c), wobei das Reagens (c) im Falle der Verwendung einer sauren Verbindung (a, ii), die aus der Mischung dimere Säure/Caprolactam besteht, weggelassen wird;
- dann führt man die Veresterung aus, indem man dem so gebildeten Präpolyamid zusetzt:
  - in dem Fall, wo die Amidblöcke erhalten wurden aus einer sauren Verbindung, bestehend aus einer dimeren Säure (i) oder einer Mischung (ii) dimere Säure/Sebacinsäure: eine Mischung von dimerer Säure und Äthylenglykol,
  - in dem Fall, wo die Amidblöcke erhalten wurden aus einer sauren Verbindung, bestehend aus einer Mischung (ii) dimere Säure/Caprolactam: Polytetrahydrofuran mit einem Molekulargewicht zwischen 500 und 5000,
  - in dem Fall, wo die Amidblöcke erhalten wurden aus einer sauren Verbindung, bestehend aus Dimethylterephthalat (iii): eine Mischung von dimerer Säure und 1,6-Hexandiol.

3. Thermoplastische, elastomere Polyesteramide mit statistischer oder alternierender Blockstruktur, mit einem hohen Molekulargewicht, dessen Minimalwert einer Inhärentviskosität, gemessen bei 0,5 Gew.-% in m-Kresol bei 25° C, gleich 0,6 dl/g entspricht, mit einer Glasübergangstemperatur unterhalb —30° C und mit einer Struktur, die aus kristallinen Polyamidsegmenten gebildet ist, dadurch gekennzeichnet, daß sie erhalten wurden, indem man die folgenden Stufen ausführt:

- man bildet zuerst Amidblöcke aus:
  - einer sauren Verbindung (a), bestehend aus einer Mischung (ii) einer dimeren Säure, wie sie im Anspruch 1 definiert ist, mit Sebacinsäure,
  - und Hexamethylendiamin (c);
- und Esterblöcke aus einer dimeren Säure und einer Dihydroxylverbindung (b), bestehend aus 1,6-Hexandiol oder aus Polytetrahydrofuran mit einem Molekulargewicht zwischen 500 und 5000,
- dann kuppelt man die vorgebildeten Blöcke.

4. Polyesteramide nach Anspruch 1, 2 oder 3, dadurch gekennzeichnet, daß die Anteile der verschiedenen Reagenzien derart festgelegt werden, daß sie zu einer Polymerstruktur führen, die 12,5 bis 80 Gew.-% Polyamidsegmente und 87,5 bis 20 Gew.-% Polyestersegmente enthält.

**Patentansprüche für den Vertragsstaat: AT**

1. Verfahren zur Herstellung von thermoplastischen, elastomeren Polyesteramiden mit stastistischer oder alternierender Blockstruktur, mit einem hohen Molekulargewicht, dessen Minimalwert einer Inhärentviskosität, gemessen bei 0,5 Gew.-% in m-Kresol bei 25° C, gleich 0,6 dl/g entspricht, mit einer Glasübergangstemperatur unterhalb —30° C und mit einer Struktur, die aus kristallinen Polyamidsegmenten gebildet ist, dadurch gekennzeichnet, daß man die direkte Umsetzung der Mischung, umfassend:

(a) eine gesättigte dimere Fettsäure, erhalten durch Fraktionierung einer hydrierten Verbindung, die aus der katalytischen Polymerisation einer Mischung von Olein-, Linol- und Linolensäure vom Typ Empol 1010 stammt, wobei der Gehalt dieser dimeren Säure an monofunktionellen Säuren kleiner als 1 Gew.-% ist und vorzugsweise 0,2 Gew.-% beträgt und ihr Gehalt an Säuren mit einer Funktionalität von mehr als 2 unterhalb 5 Gew.-%, vorzugsweise bei 3 Gew.-%, liegt;
(b) 1,6-Hexandiol
(c) und Hexamethylendiamin,

ausführt.

2. Verfahren zur Herstellung von thermoplastischen, elastomeren Polyesteramiden mit statistischer oder alternierender Blockstruktur, mit einem hohen Molekulargewicht, dessen Minimalwert einer Inhärentviskosität, gemessen bei 0,5 Gew.-% in m-Kresol bei 25° C, gleich 0,6 dl/g entspricht, mit einer Glasübergangstemperatur unterhalb —30° C und mit einer Struktur, die aus kristallinen Polyamidsegmenten gebildet ist, dadurch gekennzeichnet, daß man folgende Stufen ausführt:

— man bildet zuerst Amidblöcke aus:
  — einer sauren Verbindung (a), ausgewählt aus (i) einer dimeren Säure wie im Anspruch 1 definiert, oder (ii) einer Mischung einer gleichartigen dimeren Säure mit Sebacinsäure oder Caprolactam, oder (iii) Dimethylterephthalat
  — und Hexamethylendiamin (c), wobei das Reagens (c) im Falle der Verwendung einer sauren Verbindung (a, ii), die aus der Mischung dimere Säure/Caprolactam besteht, weggelassen wird;

— dann führt man die Veresterung aus, indem man dem so gebildeten Präpolyamid zusetzt:

  — in dem Fall, wo die Amidblöcke erhalten wurden aus einer sauren Verbindung, bestehend aus einer dimeren Säure (i) oder einer Mischung (ii) dimere Säure/Sebacinsäure: eine Mischung von dimerer Säure und Äthylenglykol,
  — in dem Fall, wo die Amidblöcke erhalten wurden aus einer sauren Verbindung, bestehend aus einer Mischung (ii) dimere Säure/Caprolactam: Polytetrahydrofuran mit einem Molekulargewicht zwischen 500 und 5000,
  — in dem Fall, wo die Amidblöcke erhalten wurden aus einer sauren Verbindung, bestehend aus Dimethylterephthalat (iii): eine Mischung von dimerer Säure und 1,6-Hexandiol.

3. Verfahren zur Herstellung von thermoplastischen, elastomeren Polyesteramiden mit statistischer oder alternierender Blockstruktur, mit einem hohen Molekulargewicht, dessen Minimalwert einer Inhärentviskosität, gemessen bei 0,5 Gew.-% im m-Kresol bei 25° C, gleich 0,6 dl/g entspricht, mit einer Glasübergangstemperatur unterhalb —30° C und mit einer Struktur, die aus kristallinen Polyamidsegmenten gebildet ist, dadurch gekennzeichnet, daß man die folgenden Stufen ausführt:

— man bildet zuerst Amidblöcke aus:
  — einer sauren Verbindung (a), bestehend aus einer Mischung (ii) einer dimeren Säure, wie sie im Anspruch 1 definiert ist, mit Sebacinsäure,
  — und Hexamethylendiamin (c);

— und Esterblöcke aus einer dimeren Säure und einer Dihydroxylverbindung (b), bestehend aus 1,6-Hexandiol oder aus Polytetrahydrofuran mit einem Molekulargewicht zwischen 500 und 5000,
— dann kuppelt man die vorgebildeten Blöcke.

4. Verfahren nach Anspruch 1, 2 oder 3, dadurch gekennzeichnet, daß die Anteile der verschiedenen Reagenzien derart festgelegt werden, daß sie zu einer Polymerstruktur führen, die 12,5 bis 80 Gew.-% Polyamidsegmente und 87,5 bis 20 Gew.-% Polyestersegmente enthält.

**Claims for the Contracting states: BE, CH, DE, FR; GB, IT, LU, NL, SE**

1. Thermoplastic elastomeric polyesteramides with a block, statistical or alternating structure, having a high molecular weight, the minimum value of which corresponds to an inherent viscosity of 0.6 dl/g, measured at 0.5% by weight in m-cresol at 25° C, having a glass transition temperature below —30° C and possessing a structure consisting of crystalline polyamide segments, characterised in that they are obtained by direct reaction of the mixture comprising:

(a) a saturated dimer fatty acid obtained by fractionating a hydrogenated composition produced by catalytic polymerisation of a mixture of oleic, linoleic and linolenic acids of the Empol 1010 type, the monofunctional acid content of this dimer acid being below 1% by weight and preferably below 0.2% by weight and its content of acids with a functionality greater than 2 being below 5% by weight and preferably below 3% by weight;
(b) 1,6-hexanediol,
(c) and hexamethylenediamine.

2. Thermoplastic elastomeric polyesteramides with a block, statistical or alternating structure, having a high molecular weight, the minimum value of which corresponds to an inherent viscosity of 0.6 dl/g, measured at 0.5% by weight in m-cresol at 25° C, having a glass transition temperature below —30° C and possessing a structure consisting of crystalline polyamide segments, characterised in that

they are obtained by implementing the following stages:

- firstly, amide block are formed from:
  - an acid compound (a) chosen from (i) a dimer acid such as defined in Claim 1, or (ii) a mixture of such a dimer acid with sebacic acid or caprolactam, or (iii) dimethyl terephthalate,
  - and hexamethylenediamin (c), the reactant (c) being omitted in the case of the use of an acid compound (a, ii) consisting of the dimer acid/caprolactam mixture;
- the esterification reaction is then carried out by adding to the prepolyamide thus formed:
  - in the case where the amide blocks are obtained from an acid compound consisting of a dimer acid (i) or a dimer acid/sebacic acid mixture (ii): a mixture of dimer acid and ethylene glycol,
  - in the case where the amide blocks are obtained from an acid compound consisting of a dimer acid/caprolactam mixture (ii): polytetrahydrofuran with a molecular weight of between 500 and 5,000,
  - in the case where the amide blocks are obtained from an acid compound consisting of dimethyl terephthalate (iii): a mixture of dimer acid and 1,6-hexanediol.

3. Thermoplastic elastomeric polyesteramides with a block, statistical or alternating structure, having a high molecular weight, the minimum value of which coresponds to an inherent viscosity of 0.6 dl/g, measured at 0.5% by weight in m-cresol at 25° C, having a glass transition temperature below −30° C and possessing a structure consisting of crystalline polyamide segments, characterised in that they are obtained by implementing the following stages:

- firstly, amide blocks are formed from:
  - an acid compound (a) consisting of a mixture (ii) of a dimer acid as defined in Claim 1 with sebacic acid,
  - and hexamethylenediamine (c);
- and ester blocks from a dimer acid and a dihydroxylated compound (b) consisting of 1,6-hexanediol or polytetrahydrofuran with a molecular weight of between 500 and 5,000,
- then the preformed blocks are coupled.

4. Polyesteramids according to Claim 1, 2 or 3, characterised in that the proportions of the various reactants are determined so as to result in a polymeric structure incorporating 12.5 to 80% by weight of polyamide segments and 87.5 to 20% by weight of polyester segments.

**Claims for the Contracting State: AT**

1. Process for obtaining thermoplastic elastomeric polyesteramides with a block, statistical or alternating structure, having a high molecular weight, the minimum value of which corresponds to an inherent viscosity of 0.6 dl/g, measured at 0.5% by weight in m-cresol at 25° C, having a glass transition temperature below −30° C and possessing a structure consisting of crystalline polyamide segments, characterised by carrying out direct reaction of the mixture comprising:

(a) a saturated dimer fatty acid obtained by fractionating a hydrogenated composition produced by catalytic polymerisation of a mixture of oleic, linoleic and linolenic acids of the Empol 1010 type, the monofunctional acid content of this dimer acid being below 1% by weight and preferably below 0.2% by weight and its content of acids with a functionality greater than 2 being below 5% by weight and preferably below 3% by weight;
(b) 1,6-hexanediol,
(c) and hexamethylenediamine.

2. Process for obtaining thermoplastic elastomeric polyesteramides with a block, statistical or alternating structure, having a high molecular weight, the minimum value of which corresponds to an inherent viscosity of 0.6 dl/g, measured at 0.5% by weight in m-cresol at 25° C, having a glass transition temperature below −30° C and possessing a structure consisting of crystalline polyamide segments, characterised by implementing the following stages:

- firstly, amide blocks are formed from:
  - an acid compound (a) chosen from (i) a dimer acid such as defined in Claim 1, or (ii) a mixture of such a dimer acid with sebacic acid or caprolactam, or (iii) dimethyl terephthalate,
  - and hexamethylenediamine (c), the reactant (c) being omitted in the case of the use of an acid compound (a, ii) consisting of the dimer acid/caprolactam mixture;
- the esterification reaction is then carried out by adding to the prepolyamide thus formed:

- in the case where the amide blocks are obtaining from an acid compound consisting of a dimer acid (i) or a dimer acid/sebacic acid mixture (ii): a mixture of dimer acid and ethylene glycol,
- in the case where the amide blocks are obtained from an acid compound consisting of a dimer acid/caprolactam mixture (ii): polytetrahydrofuran with a molecular weight of between 500 and 5,000,
- in the case where the amide blocks are obtained from an acid compound consisting of dimethylterephthalate (iii): a mixture of dimer acid and 1,6-hexanediol.

3. Process for obtaining thermoplastic elastomeric polyesteramides with a block, statistical or alternating structure, having a high molecular weight, the minimum value of which corresponds to an inherent viscosity of 0.6 dl/g, measured at 0.5% by weight in m-cresol at 25° C, having a glass transition temperature below —30° C and possessing a structure consisting of crystalline polyamide segments, characterised by implementing the following stages:

- firstly, amide blocks are formed from:
  - an acid compound (a) consisting of a mixture (ii) of a dimer acid as defined in Claim 1 with sebacic acid,
  - and hexamethylenediamine (c);
- and ester blocks from a dimer acid and a dihydroxylated compound (b) consisting of 1,6-hexanediol or polytetrahydrofuran with a molecular weight of between 500 and 5,000,
- then the preformed block are coupled.

4. Process according to Claim 1, 2 or 3, characterised in that the proportions of the various reactants are determined so as to result in a polymeric structure incorporating 12.5 to 80% by weight of polyamide segments and 87.5 to 20% by weight of polyester segments.